# EUROPÄISCHE PATENTSCHRIFT

(11) **EP 3 909 409 B1**
(45) Veröffentlichungstag und Bekanntmachung des Hinweises auf die Patenterteilung: **19.10.2022**
(21) Anmeldenummer: 21162040.6
(22) Anmeldetag: 11.03.2021
(51) Int. Cl.: A01C 7/08, A01C 7/20, A01C 5/06

(54) **DRILLMASCHINE**
ROW PLANTER
MACHINE À SEMER EN LIGNE

(30) Priorität: 15.05.2020 AT 504312020
(43) Veröffentlichungstag der Anmeldung: 17.11.2021
(73) Patentinhaber: Wintersteiger AG, 4910 Ried im Innkreis (AT)
(72) Erfinder: Hanslauer, Georg, 4782 Sankt Florian am Inn (AT)
(74) Vertreter: Hübscher & Partner Patentanwälte GmbH

(56) Entgegenhaltungen:
- EP-A1- 3 228 170
- EP-A1- 3 366 133
- EP-A1- 3 556 193
- WO-A2-2008/024760

## Beschreibung

Die Erfindung bezieht sich auf eine Drillmaschine mit Konsolen für je eine Säschar, mit einem die Konsolen längsverstellbar aufnehmenden Scharträger aus einem Hohlprofil, das mit einer hochkant verlaufenden Führungswand und konvergierenden Verbindungsstegen zu den anschließenden Profilwänden eine in eine schwalbenschwanzförmige Führungsnut der Konsolen eingreifende Schwalbenschwanzleiste bildet, und mit auf den Konsolen vorgesehenen, mit dem oberen Verbindungssteg zusammenwirkenden, quer zur Stegfläche verstellbaren Klemmbacken, wobei die Schwalbenschwanzleiste mit Spiel in die schwalbenschwanzförmige Führungsnut der Konsolen eingreift. Solche Drillmaschinen sind bekannt aus EP 3 556 193 A1 und EP 3 228 170 A1.

Zum Einstellen des Drillreihenabstands ist es bekannt, die die Säscharen aufnehmenden Konsolen auf einem Scharträger längsverstellbar zu lagern. Zu diesem Zweck bildet das Hohlprofil des Scharträgers mit einer hochkant verlaufenden Führungswand und mit zu den anschließenden Profilwänden konvergierenden Verbindungsstegen eine Schwalbenschwanzleiste, die in eine Schwalbenschwanznut der Konsolen eingreift, sodass sich für die Konsolen auf dem Scharträger eine Schwalbenschwanzführung ergibt, die ein stufenloses Verlagern der Konsolen entlang des Scharträgers erlaubt. Die jeweilige Verlagerung kann mithilfe einer Klemmbacke festgestellt werden, die beispielsweise durch eine Klemmschraube an den oberen Verbindungsteg der Führungswand klemmend angedrückt wird. Nachteilig ist allerdings, dass aufgrund der Drehmomentbelastung der Konsolen durch die Säscharen und die zugehörigen Zusatzeinrichtungen erhebliche Reibungskräfte auftreten, die bei der Verlagerung der Konsolen überwunden werden müssen.

Der Erfindung liegt somit die Aufgabe zugrunde, die Konsolen für die Säscharen so auf dem Scharträger zu lagern, dass mit einfachen konstruktiven Mitteln eine wenig arbeitsaufwendige Einstellung des Drillreihenabstands möglich wird, ohne die sichere Festlegung der Konsolen in ihrer gegenseitigen Lage auf dem Scharträger zu gefährden.

Ausgehend von einer Drillmaschine der eingangs geschilderten Art löst die Erfindung die gestellte Aufgabe dadurch, dass dass die Konsolen ein auf dem oberen Führungssteg abrollendes Laufrollenpaar mit zur Stegfläche parallelen Drehachsen und ein auf dem oberen Längsrand der Führungswand abrollendes Laufrollenpaar mit quer zur Stegfläche verlaufenden Drehachsen aufweist, wobei die Laufrollenpaare in der Klemmlage der Klemmbacken von der Schwalbenschwanzleiste abgehoben sind.

Das Eingriffsspiel zwischen den schwalbenschwanzförmigen Führungsnuten und der durch den Scharträger gebildeten Schwalbenschwanzleiste stellt sicher, dass sich die Konsolen bei gelösten Klemmbacken über die beiden Laufrollenpaare einerseits auf dem oberen Verbindungssteg und anderseits auf dem oberen Längsrand der Führungswand abstützen und im Übrigen vom Scharträger freigestellt sind, sodass die Auflasten der Konsolen ausschließlich über die Laufrollenpaare auf den Scharträger abgetragen werden können. Dies bedeutet, dass sich die Konsolen mithilfe der Laufrollen ohne besonderen Kraftaufwand verlagern lassen, wenn die Säscharen und die den Konsolen zugehörigen Zusatzeinrichtungen vom Boden abgehoben sind. Werden die Klemmbacken zum Festlegen der gewählten Konsolenstellung betätigt und an den oberen Verbindungssteg der Führungswand des Scharträgers angedrückt, so werden die Konsolen im Rahmen des Spiels zwischen der Schwalbenschwanzleiste und den schwalbenschwanzförmigen Führungsnuten angehoben und am Scharträger festgeklemmt. Da die Laufrollen zufolge der durch die Klemmung bedingten Höhenverlagerung der Konsolen gegenüber dem Scharträger vom Scharträger abheben, beeinflussen diese Laufrollen den Klemmvorgang nicht und kommen erst wieder zum Einsatz, wenn durch das Lösen der Klemmbacken die Konsolen gewichtsbedingt abgesenkt werden, bis die Laufrollen auf den Scharträger im Bereich des oberen Verbindungsstegs und des oberen Längsrandes der Führungswand aufsetzen.

Obwohl es bei der Beaufschlagung der Klemmbacken lediglich darauf ankommt, dass die in den Konsolen gelagerten Klemmbacken quer zur Stegfläche an die Verbindungsstege angedrückt werden, ergeben sich besonders vorteilhafte Konstruktionsverhältnisse, wenn die Klemmbacken einen an einem Widerlager der Konsolen abgestützten, durch eine Klemmschraube beaufschlagbaren, einarmigen Hebel bilden. In diesem Fall kann durch die Klemmschraube auf die jeweilige Klemmbacke unter Ausnützung eines entsprechenden Übersetzungsverhältnisses ein entsprechendes Klemmmoment auf die Klemmbacke aufgebracht werden.

In der Zeichnung ist der Erfindungsgegenstand beispielsweise dargestellt. Es zeigen
- Fig. 1: eine erfindungsgemäße Drillmaschine in einer schematischen Seitenansicht,
- Fig. 2: einen Schnitt einer Konsole senkrecht zum Scharträger durch die Klemmbacke in einem größeren Maßstab und
- Fig. 3: einen gegenüber der Fig. 3 versetzten Konsolenschnitt durch die Laufrollen.

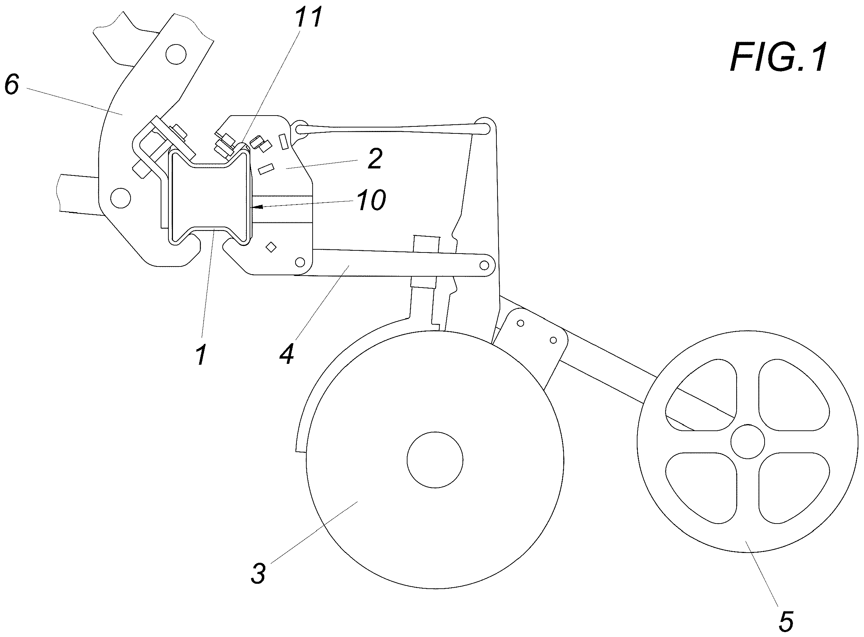

Die in Fig. 1 nur schematisch angedeutete Drillmaschine weist auf einem Scharträger 1 mit seitlichem Abstand nebeneinandergereihte Konsolen 2 für entsprechende Einbettwerkzeuge auf, die unterschiedlich, beispielsweise als Schleppschar oder Scheibenschar ausgebildet sein können. Die in der Zeichnung als Doppelscheibenscharen ausgebildeten Säscharen 3 sind über ein Gelenkparallelogramm 4 an den Konsolen 2 angelenkt und mit einem Tiefenrad 5 versehen, um die Ablegetiefe vorzugeben. Konstruktionsmaßnahmen, die beispielsweise für einen entsprechenden Bodenanpressdruck oder die dosierte Saatgutzuführung zu den einzelnen Säscharen 3 erforderlich sind, sind aus Übersichtlichkeitsgründen nicht dargestellt, weil es im vorliegenden Fall lediglich um die Konstruktionsmaßnahmen geht, die ein vergleichsweise einfaches Einstellen der Drillreihenabstände erlauben.

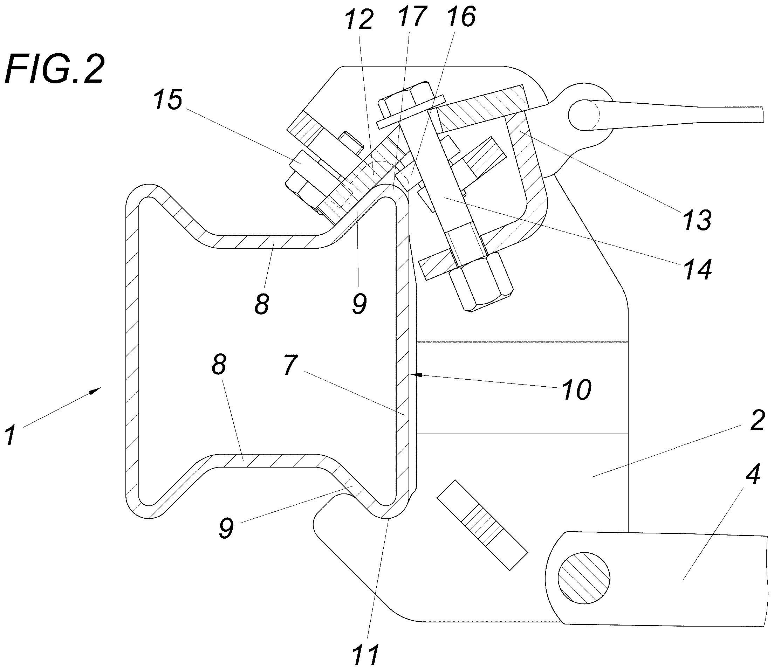

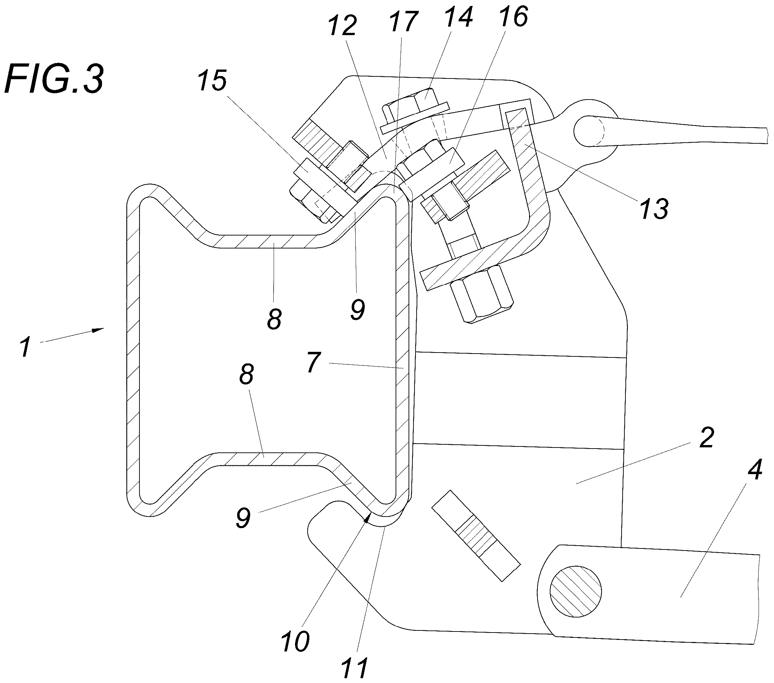

Der an einem Anbaurahmen 6 festklemmbare Scharträger 1 wird gemäß den Fig. 2 und 3 durch ein Hohlprofil mit einem in der Grundform rechtwinkeligen Querschnitt gebildet, das auf der den Konsolen 2 zugekehrten Seite eine hochkant verlaufende Führungswand 7 mit zu den anschließenden Wänden 8 konvergierenden Verbindungsstegen 9 aufweist. Diese Führungswand 7 formt mit den Verbindungsstegen 9 eine Schwalbenschwanzleiste 10, die mit Spiel in eine schwalbenschwanzförmige Führungsnut 11 der Konsolen 2 eingreift.

Zum Festlegen der Konsolen 2 in der jeweils gewählten Schiebestellung auf dem Scharträger 1 dient eine Klemmbacke 12, die als einarmiger Hebel ausgebildet ist, sich an einem konsolenfesten Widerlager 13 abstützt und mithilfe einer Klemmschraube 14 beaufschlagt wird. Durch das Anziehen der Klemmschraube 14 wird die Klemmbacke 12 quer zur Stegfläche des oberen Verbindungsstegs 9 mit der Folge angedrückt, dass die Konsole 2 im Rahmen des Spiels zwischen der Führungsleiste 10 des Scharträgers 1 und der schwalbenschwanzförmigen Führungsnut 11 der Konsole 2 angehoben wird, bis sich die Schwalbenschwanzleiste 10 in der Führungsnut 11 verkeilt, wie dies in der Fig. 2 dargestellt ist.

Die Konsolen 2 sind mit je zwei Paaren von beidseits der Klemmbacke 12 gelagerten Laufrollen 15, 16, vorzugsweise in Form von Wälzlagern, versehen, die in der Klemmstellung der Klemmbacken 12 nach Fig. 2 vom Scharträger 1 abgehoben sind. Die beiden mit dem oberen Verbindungssteg 9 zusammenwirkenden Laufrollen 15 weisen eine zur Stegfläche parallele, zur Längsrichtung des Scharträgers 1 senkrechte Drehachse auf, während die Laufrollen 16 für den oberen Längsrand 17 der Führungswand 7 vorgesehen sind und eine zur Längsrichtung des Scharträgers 1 senkrechte, aber quer zur Stegfläche verlaufende Drehachse besitzen. Die Anordnung der Laufrollen 15, 16 ist so getroffen, dass beim Lösen der Klemmbacken 12 und der damit verbundenen, gewichtsbedingten Absenkung der Konsolen 2 gegenüber dem Scharträger 1 die Schwalbenschwanzleiste 10 in der schwalbenschwanzförmigen Führungsnut 11 freigestellt wird und die Laufrollen 15, 16 auf den Verbindungssteg 9 bzw. den oberen Längsrand der Führungswand 7 aufsetzen, bevor die obere Hinterschneidung der schwalbenschwanzförmigen Führungsnut 11 der Konsolen 2 auf die Schwalbenschwanzleiste 10 aufsetzt, wie dies der Fig. 3 entnommen werden kann. In dieser Freistellung der Konsolen 2 können diese mithilfe der Laufrollen 15, 16 ohne besonderen Kraftaufwand entlang des Scharträgers 1 verfahren werden, weil ja die gesamte Auflast der Konsolen über die Laufräder 15, 16 auf den Scharträger 1 abgetragen wird.

## Patentansprüche

1. Drillmaschine mit Konsolen (2) für je eine Säschar (3), mit einem die Konsolen (2) längsverstellbar aufnehmenden Scharträger (1) aus einem Hohlprofil, das mit einer hochkant verlaufenden Führungswand (7) und konvergierenden Verbindungsstegen (9) zu den anschließenden Profilwänden (8) eine in eine schwalbenschwanzförmige Führungsnut (11) der Konsolen (2) eingreifende Schwalbenschwanzleiste (10) bildet, und mit auf den Konsolen (2) vorgesehenen, mit dem oberen Verbindungssteg (9) zusammenwirkenden, quer zur Stegfläche verstellbaren Klemmbacken (12), wobei die Schwalbenschwanzleiste (10) mit Spiel in die schwalbenschwanzförmige Führungsnut (11) der Konsolen (2) eingreift, **dadurch gekennzeichnet, dass** die Konsolen (2) ein auf dem oberen Führungssteg (9) abrollendes Laufrollenpaar (15) mit zur Stegfläche parallelen Drehachsen und ein auf dem oberen Längsrand (17) der Führungswand (7) abrollendes Laufrollenpaar (16) mit quer zur Stegfläche verlaufenden Drehachsen aufweist, wobei die Laufrollenpaare (15, 16) in der Klemmlage der Klemmbacken (12) von der Schwalbenschwanzleiste (10) abgehoben sind.

2. Drillmaschine nach Anspruch 1, **dadurch gekennzeichnet, dass** die Klemmbacken (12) einen an einem Widerlager (13) der Konsolen (2) abgestützten, durch eine Klemmschraube (14) beaufschlagbaren, einarmigen Hebel bilden.

## Claims

1. Seed drill comprising brackets (2) for one sowing coulter (3) in each case, having a coulter carrier (1) which receives the brackets (2) in a longitudinally adjustable manner and consists of a hollow profile which, with a guide wall (7) extending upright and converging connecting webs (9) to the adjoining profile walls (8), forms a dovetail bar (10) which engages into a dovetail-shaped guide groove (11) of the brackets (2), and having clamping jaws (12) which are provided on the brackets (2), cooperate with the upper connecting web (9) and can be adjusted transversely with respect to the web surface, wherein the dovetail bar (10) engages with clearance into the dovetail-shaped guide groove (11) of the brackets (2), **characterised in that** the brackets (2) have a pair of running rollers (15), which roll on the upper guide web (9) and have axes of rotation in parallel with the web surface, and a pair of running rollers (16) which roll on the upper longitudinal edge (17) of the guide wall (7) and have axes of rotation extending transversely with respect to the web surface, wherein the pairs of running rollers (15, 16) are raised from the dovetail bar (10) when the clamping jaws (12) are in the clamping position.

2. Seed drill as claimed in claim 1, **characterised in that** the clamping jaws (12) form a single-armed lever which is supported on a counter-bearing (13) of the brackets (2) and can be acted upon by a clamping screw (14).

## Revendications

1. Semoir avec des consoles (2) destinées chacune à un soc (3), avec un support de socs (1) fait d'un profilé creux recevant les consoles (2) de façon réglable en longueur, qui forme avec une paroi de guidage (7) courant verticalement et des traverses de connexion (9) convergeant vers les parois de profilé de raccordement (8) une barre en queue d'aronde (10) pénétrant dans une rainure de guidage en forme de queue d'aronde (11) des consoles (2), et avec des mâchoires de serrage (12) prévues sur les consoles (2), réglables perpendiculairement à la surface des tiges et interagissant avec la traverse de connexion supérieure (9), la barre en queue d'aronde (10) pénétrant avec du jeu dans la rainure de guidage en forme de queue d'aronde (11) des consoles (2), **caractérisé en ce que** les consoles (2) comportent une paire de galets de roulement (15) roulant sur la traverse de connexion supérieure (9) avec des axes de rotation parallèles à la surface de la tige et une paire de galets de roulement (16) roulant sur l'arête longitudinale (17) de la paroi de guidage (7) avec des axes de rotation courant perpendiculairement à la surface de la tige, les paires de galets de roulement (15, 16) étant décollés de la barre en queue d'aronde (10) lorsque les mâchoires de serrage (12) sont en position de serrage.

2. Semoir selon la revendication 1, **caractérisé en ce que** les mâchoires de serrage (12) forment un levier à bras unique appuyé contre une butée (13) des consoles (2) et pouvant être sollicité par une vis de serrage (14).
